# EUROPÄISCHE PATENTSCHRIFT

(11) **EP 1 049 608 B1**
(45) Veröffentlichungstag und Bekanntmachung des Hinweises auf die Patenterteilung: **23.12.2009**
(21) Anmeldenummer: 99904706.1
(22) Anmeldetag: 15.01.1999
(51) Int. Cl.: B60R 25/00, E05B 49/00

(54) **SCHLIESSSYSTEM, INSBESONDERE FÜR EIN KRAFTFAHRZEUG**
LOCKING SYSTEM, ESPECIALLY FOR A MOTOR VEHICLE
SYSTEME DE FERMETURE, EN PARTICULIER POUR VEHICULE AUTOMOBILE

(30) Priorität: 19.01.1998 DE 19801739; 15.05.1998 DE 19821828
(43) Veröffentlichungstag der Anmeldung: 08.11.2000
(73) Patentinhaber: Marquardt GmbH, 78604 Rietheim-Weilheim (DE)
(72) Erfinder: NEUMANN, Reinhart, D-72166 Mössingen (DE); WEISSER, Dietmar, D-78604 Rietheim-Weilheim (DE); MÜLLER, Karl, D-78628 Rottweil (DE)
(74) Vertreter: Eisele, Otten, Roth & Dobler
(86) Internationale Anmeldenummer: PCT/DE1999/000054
(87) Internationale Veröffentlichungsnummer: WO 1999/036295

(56) Entgegenhaltungen:
- EP-A- 0 440 974
- EP-A- 0 521 547
- EP-A- 0 523 602
- EP-A- 0 735 219
- EP-A- 0 741 220
- EP-A- 0 767 286
- EP-A- 0 770 749
- EP-A- 1 046 558
- DE-A- 3 900 494
- DE-C- 19 511 386
- FR-A- 2 674 895
- FR-A- 2 737 932
- US-A- 4 761 645

## Beschreibung

Die Erfindung betrifft ein Schließsystem nach dem Oberbegriff des Patentanspruchs 1.

Bei erhöhten Sicherheitsanforderungen werden elektronische Schließsysteme verwendet. Insbesondere bei Kraftfahrzeugen werden solche Schließsysteme als Türschließsysteme verwendet.

Derartige Schließsysteme sind aus der DE 43 40 260 A1 bekannt. Das Schließsystem besteht aus einer wenigstens zwei Zustände besitzenden Steuereinrichtung zur Ent- und/oder Verriegelung der Autotüren, zur Freigabe und/oder Sperrung des Zündschlosses o. dgl., sowie aus einem zugchörigen elektronischen Schlüssel. Die Steuereinrichtung und der Schlüssel besitzen Sende- und/oder Empfangsmittel, die zu deren bestimmungsgemäßen Betrieb dienen. Im bestimmungsgemäßen Betrieb ist zwischen dem Schlüssel und der Steuereinrichtung wenigstens ein codiertes Betriebssignal übertragbar, so daß nach positiver Auswertung des übertragenen Betriebssignals eine Änderung des Zustandes der Steuereinrichtung bewirkbar ist.

Der elektronische Schlüssel besitzt Tasten, die der Benutzer zur Auslösung der Übertragung des Betriebssignals für die Ent- und/oder Verriegelung der Autotüren betätigen muß. Dies kann in manchen Fällen hinderlich sein, beispielsweise wenn der Benutzer die Hände nicht frei hat. Zur Freigabe des Zündschlosses ist der elektronische Schlüssel in das Zündschloß einzuführen, was nachteilig für den Komfort des Benutzers sein kann.

Ein Schließsystem zum Öffnen des Kofferraumdeckels an einem Kraftfahrzeug, wobei eine Betätigung von Tasten durch den Benutzer nicht notwendig ist, ist aus der EP-A2-0 770 749 bekannt. Das Schließsystem weist Sende- und Empfangsmittel mit zugehörigen Antennen auf, die Betriebssignale mit einem vom Benutzer getragenen Transponder in einem begrenzten Bereich austauschen. Hierzu sind Sensoren am Kraftfahrzeug angebracht, die zur Detektion des Benutzers in der Nähe des Kofferraums dienen und darauffolgend ein Abfragesignal von dem Sende- und Empfangsmittel zum Transponder auslösen. Um den Kofferraum zu öffnen, muß der Benutzer den Transponder in einer bestimmten Reihenfolge in die Nähe der Antennen am Kofferraum bewegen. Der Transponder kann auch zum Entriegeln der Türen sowie zur Deaktivierung einer Wegfahrsperre des Kraftfahrzeugs dienen.

Schließlich ist aus der EP-A2-0 735 219 ein Schließsystem für ein Kraftfahrzeug bekannt, bei dem ebenfalls keine Betätigung von Tasten durch den Benutzer erforderlich ist. Das Schließsystem besteht aus Sende- und Empfangsmitteln im Kraftfahrzeug und einem tragbaren, einen Sender sowie einen Empfänger enthaltenden Schlüssel. Den Sende- und Empfangsmitteln im Kraftfahrzeug sind Sensoren zugeordnet, die einen sich annähernden Benutzer innerhalb gewisser begrenzter Bereiche um das Kraftfahrzeug detektieren. Nach der Detektion wird von den Sende- und Empfangsmitteln im Kraftfahrzeug ein Wecksignal an den Schlüssel gesendet, um den Austausch von Betriebssignalen zwischen den Sende- und Empfangsmitteln und dem Schlüssel zur Entriegelung der Türen auszulösen.

Der Erfindung liegt die Aufgabe zugrunde, das Schließsystem derart weiterzuentwickeln, daß der Komfort für den Benutzer gesteigert ist. Insbesondere soll die Funktion des Schließsystems ohne manuelle Betätigung des Schlüssels durch den Benutzer möglich sein.

Diese Aufgabe wird bei einem gattungsgemäßen Schließsystem durch die kennzeichnenden Merkmale des Anspruchs 1 gelöst.

Das erfindungsgemäße Schließsystem besitzt einen begrenzten Bereich, in dem der Code zur Auslösung der Zustandsänderung der Steuereinrichtung als zweites Betriebssignal übertragbar ist. Sobald sich der Schlüssel in diesem begrenzten Bereich befindet, ist der bestimmungsgemäße Betrieb des Schlüssels ohne Einwirkung des Benutzers auf den Schlüssel aktivierbar. Weitere Ausgestaltungen der Erfindung sind Gegenstand der Unteransprüche.

Zweckmäßigerweise kann im begrenzten Bereich ein weiteres, gegebenenfalls nichtcodiertes erstes Betriebssignal als Wecksignal von der Steuereinrichtung auf den Schlüssel zur Aktivierung des bestimmungsgemäßen Betriebs des Schlüssels übertragbar sein. Um eine gezielte Aussendung des ersten Betriebssignals zu gewährleisten, bietet es sich an, dem begrenzten Bereich ein Überwachungsmittel zur Detektion der Annäherung eines Benutzers an den begrenzten Bereich und/oder zum Aufenthalt des Benutzers im begrenzten Bereich zuzuordnen. Dadurch ist die Übertragung des Wecksignals aufgrund der Detektion des Benutzers durch das Überwachungsmittel auslösbar. Ebenso ist es möglich, dem begrenzten Bereich ein von einem im begrenzten Bereich befindlichen Benutzer betätigbares Schaltmittel und/oder einen eine Aktion des Benutzers, wie das Betätigen des Türgriffes o. dgl., detektierenden Sensor zuzuordnen. In diesem Fall ist die Übertragung des Wecksignals aufgrund der Betätigung des Schaltmittels und/oder aufgrund der Detektion durch den Sensor auslösbar.

Die Zustandsänderung der Steuereinrichtung kann unmittelbar nach positiver Auswertung des übertragenen zweiten Betriebssignals erfolgen. Alternativ kann nach positiver Auswertung des übertragenen zweiten Betriebssignals die Steuereinrichtung zunächst einen Freigabezustand einnehmen. Weiter ist dem begrenzten Bereich eine von einem im begrenzten Bereich befindlichen Benutzer betätigbare Handhabe zugeordnet, wobei erst durch Betätigung der Handhabe die Änderung des Zustandes der Steuereinrichtung dann bewirkbar ist, wenn die Steuereinrichtung im Freigabezustand befindlich ist. Dadurch ist gewährleistet, daß die Zustandsänderung der Steuereinrichtung nur lediglich dann erfolgt, wenn diese vom Benutzer auch gewollt ist.

Eine besonders effektive Funktion des Schließsystems kann erreicht werden, indem neben dem ersten und zweiten Betriebssignal noch weitere Signale zwischen der Steuereinrichtung und dem Schlüssel übertragen werden. Nach Aktivierung des bestimmungsgemäßen Betriebs des Schlüssels aufgrund des ersten Betriebssignals kann ein Rückmeldesignal vom Schlüssel gesendet werden. Dies signalisiert der Steuereinrichtung, daß ein Schlüssel im begrenzten Bereich befindlich ist. Die Steuereinrichtung überträgt nunmehr eine Identitäts-Kennung zum Schlüssel, beispielsweise die Fahrzeug-Nummer. Lediglich bei gleicher Identitäts-Kennung ist der Schlüssel zur jeweiligen Steuereinrichtung zugehörig. Danach sendet der Schlüssel eine Rückmelde-Kennung an die Steuereinrichtung zurück, beispielsweise die Fahrzeug-Nummer und die Schlüssel-Nummer. Da mehrere Schlüssel mit gegebenenfalls unterschiedlichen Berechtigungen zu einer Steuereinrichtung zugehörig sein können, erfährt somit die Steuereinrichtung, um welchen Schlüssel es sich vorliegend handelt. Nachdem diese vorbereitende Signalübertragung erfolgt ist, kann anschließend das verschlüsselte zweite Betriebsignal, vorzugsweise in einer bidirektionalen Kommunikation, zwischen der Steuereinrichtung und dem Schlüssel zum Nachweis der Echtheit des Schlüssels ausgetauscht werden.

Als Träger für die Signalübertragung bieten sich elektromagnetische Wellen an. Es ist bevorzugt, für den von der Steuereinrichtung zum Schlüssel übertragenen Teil des ersten Betriebssignals und/oder des zweiten Betriebssignals und/oder eines weiteren Signals elektromagnetischen Wellen im Mikrowellen-Bereich, wie im GHz-Bereich, zu verwenden. Weiter kann der Träger für den vom Schlüssel zur Steuereinrichtung übertragenen Teil des ersten Betriebssignals und/oder des zweiten Betriebssignals und/oder eines weiteren Signals aus elektromagnetischen Wellen im Mikrowellen-Bereich, wie im GHz-Bereich, oder im Hochfrequenz-Bereich, wie im MHz-Bereich, oder im induktiven Bereich, wie im KHz-Bereich, bestehen.

In einer besonders bevorzugten Ausgestaltung handelt es sich um ein Türschließ- und Zündschloßsystem für ein Kraftfahrzeug, bei dem ein erster begrenzter Bereich einen Teil des Außenbereichs des Kraftfahrzeugs und ein zweiter begrenzter Bereich wenigstens einen Teil des Kfz-Innenbereichs umfaßt. Sowohl das erste Betriebssignal als auch das zweite Betriebssignal sind im ersten und zweiten begrenzten Bereich, also außerhalb und innerhalb des Kraftfahrzeugs, zumindestens in Richtung von der Steuereinrichtung zum Schlüssel mittels elektromagnetischen Wellen im GHz-Bereich übertragbar. In einer weiteren besonders bevorzugten Ausgestaltung ist das erste Betriebssignal und das zweite Betriebssignal außerhalb des Kraftfahrzeugs im ersten begrenzten Bereich zumindestens in Richtung von der Steuereinrichtung zum Schlüssel ebenfalls mittels elektromagnetischen Wellen im GHz-Bereich übertragbar. Hingegen wird das zweite Betriebssignal sowie gegebenenfalls auch das erste Betriebssignal innerhalb des Kraftfahrzeugs im zweiten begrenzten Bereich zumindestens in Richtung von der Steuereinrichtung zum Schlüssel mittels elektromagnetischen Wellen im KHz-Bereich übertragen.

Der im Außenbereich des Kraftfahrzeugs befindliche erste begrenzte Bereich ist einem verschließbaren Element, wie der Autotüre, dem Kofferraumdeckel o. dgl., zugeordnet. Zur Vermeidung von Fehlfunktionen ist von der Steuereinrichtung zu unterscheiden, ob sich der Benutzer außerhalb oder innerhalb des Kraftfahrzeugs befindet. Zur Vereinfachung dieser Unterscheidung besitzt der begrenzte Bereich eine von der Kreissymmetrie abweichende Ausrichtung, derart daß sich der begrenzte Bereich im wesentlichen einseitig benachbart zum verschließbaren Element erstreckt. Besonders bevorzugt ist eine in etwa keulenförmige oder doppelkeulenförmige Ausrichtung des begrenzten Bereichs. Eine solche keulen- oder doppelkeulenförmige Gestalt wird auf einfache Weise durch Verwendung von elektromagnetischen Wellen im GHz-Bereich erzielt.

Das Sende-/Empfangsmittel für die elektromagnetischen Wellen kann einen Sensor für elektromagnetische Strahlung enthalten, wobei dieser Sensor wiederum aus einer für die benützte Frequenz empfindlichen Antenne mit gegebenenfalls zugehöriger Elektronik besteht. Der dem Außenbereich des Kraftfahrzeugs zugeordnete Sensor für den ersten begrenzten Bereich kann zweckmäßigerweise am Außenspiegel, im Türgriff, in der Rammschutzleiste an der Autotüre, in dem hinteren Stoßfänger und/oder an der Heckscheibe des Kraftfahrzeugs angeordnet sein. Der dem Innenbereich des Kraftfahrzeugs zugeordnete Sensor für den zweiten begrenzten Bereich kann sich am Innenspiegel, in der Mittelkonsole, am Dachhimmel und/oder an der Heckablage des Kraftfahrzeugs befinden.

Erfindungsgemäß findet die selbständige Zustandsänderung der Steuereinrichtung ohne Einwirkung des Benutzers nur dann statt, wenn der zugehörige Schlüssel sich innerhalb des begrenzten Bereichs befindet. Es kann jedoch wünschenswert sein, daß zusätzlich außerhalb des begrenzten Bereichs eine Zustandsänderung der Steuereinrichtung aufgrund manueller Auslösung am Schlüssel durch den Benutzer ermöglicht ist. Hierzu kann mittels eines weiteren Signals, das vom Schlüssel bei Auslösung durch den Benutzer in der Art einer Fernbedienung aussendbar ist, die Steuereinrichtung zur Einwirkung auf das verschließbare Element von außerhalb des ersten begrenzten Bereichs betätigbar ausgestaltet sein.

Die mit der Erfindung erzielten Vorteile bestehen insbesondere darin, daß die Handhabung für den Benutzer erleichtert wird. Die Freigabe des Schließsystems erfolgt für den berechtigten Benutzer weitgehend automatisch, wobei es genügt, daß der Benutzer den Schlüssel bei sich trägt. Eine manuelle Betätigung ist nicht erforderlich, was besonders dann vorteilhaft ist, wenn der Benutzer beispielsweise nach dem Einkaufen mit Taschen beladen ist. Auch ein Einführen des Schlüssels in ein zugehöriges Schloß ist nicht notwendig, so daß auch ein versehentliches Vergessen des Schlüssels im Schloß ausgeschlossen ist. Außerdem werden beim erfindungsgemäßen Schließsystem Fehlbedienungen verhindert. Dadurch wird wiederum die Diebstahlsicherheit noch weiter erhöht.

Insbesondere bei Verwendung von elektromagnetischen Wellen im GHz-Bereich als Träger für wenigstens Teilen von Betriebssignalen ist weiter vorteilhaft, daß kurze Reaktionszeiten aufgrund der schnellen Datenkommunikation für das Schließsystem resultieren. Der Benutzer merkt keine spürbare Verzögerung bei der Türöffnung oder dem Startvorgang. Der Sensor für die elektromagnetischen Wellen benötigt nur eine geringe Sendeleistung, so daß lediglich ein geringer Stromverbrauch für das Schließsystem resultiert. Es genügt, an jeder Fahrzeugseite einen Sensor anzuordnen, was die Kosten für das Schließsystem reduziert. Dennoch ist eine selektive Türöffnung möglich, indem lediglich die Tür, deren Türgriff durch den Benutzer betätigt wird, entriegelt wird. Durch die Ausgestaltung der Antennen im Sensor ist die Größe und Form des Bereichs beeinflußbar, in dem die Betriebssignale übertragbar sind, womit eine einfache Anpassung an das jeweilig zu schließende Teil vorzunehmen ist. Zudem handelt es sich um kleinbauende Antennen, so daß eine zweckmäßige Unterbringung am Kraftfahrzeug gewährleistet ist. Außerdem können die Sensoren im GHz-Bereich für weitere Funktionen außerhalb des Schließung verwendet werden, beispielsweise für den Innenraumschutz, als Precrash-Detektor, zur Abstandsmessung, für die Einparkhilfe o. dgl. womit eine zusätzliche Funktionalität des Kraftfahrzeugs mit geringem Kostenaufwand gegeben ist.

Ausführungsbeispiele der Erfindung sind in den Zeichnungen dargestellt und werden im folgenden näher beschrieben. Es zeigen
- Fig. 1: ein mit einem Schließsystem ausgestattetes Kraftfahrzeug, dem sich ein berechtigter Benutzer nähert,
- Fig. 2: das Kraftfahrzeug aus Fig. 1, wobei sich der Benutzer außerhalb des Kraftfahrzeugs, unmittelbar an der Autotüre befindet,
- Fig. 3: das Kraftfahrzeug aus Fig. 1, wobei sich der Benutzer innerhalb des Kraftfahrzeugs befindet,
- Fig. 4: schematisch mehrere Bereiche des Kraftfahrzeugs, in denen eine selbsttätige Betätigung des Schließsystems bewirkbar ist,
- Fig. 5: schematisch die Anordnung des Schließsystems im Kraftfahrzeug,
- Fig. 6: das Schließsystem als Blockschaltbild,
- Fig. 7: schematisch die Anordnung des Schließsystems an einem Kraftfahrzeug in einer weiteren Ausführungsform,
- Fig. 8: ein Ablaufdiagramm für die Übermittlung der Betriebssignale zur Öffnung der Autotüren und
- Fig. 9: ein Ablaufdiagramm für die Übermittlung der Betriebssignale zur Öffnung der Autotüren sowie zur Freigabe des Motorstartvorgangs.

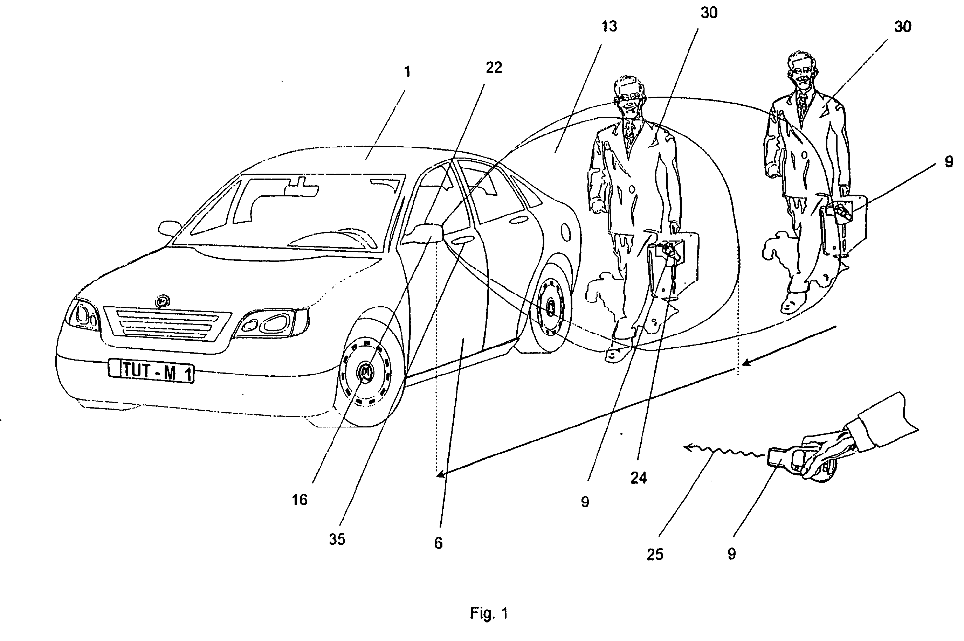

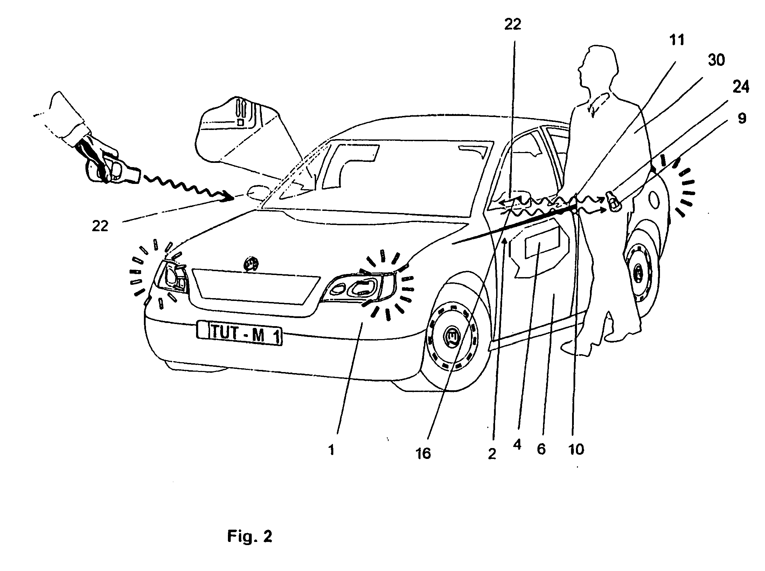

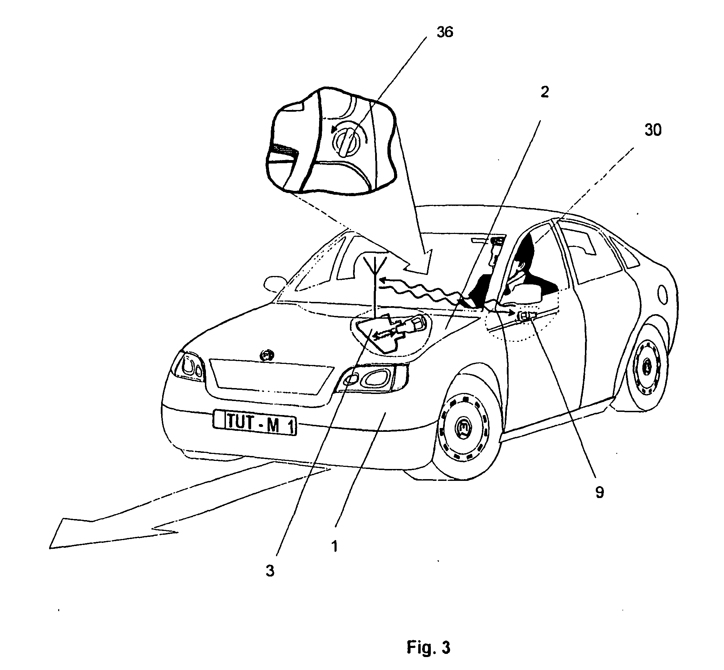

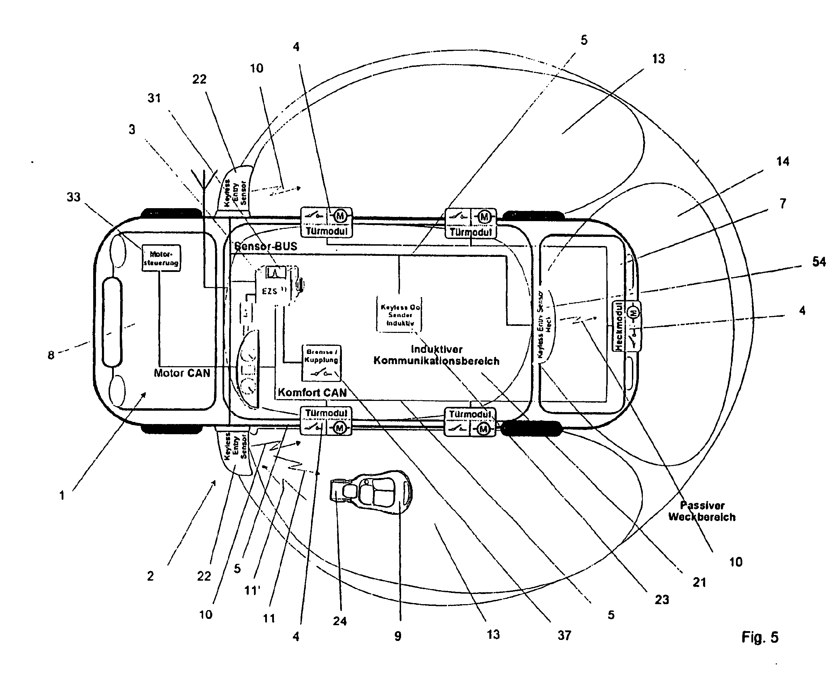

In Fig. 1 ist ein mit einem erfindungsgemäßen Schließsystem versehenes Kraftfahrzeug 1 zu sehen, dem sich ein Benutzer 30 nähert. Der Benutzer 30 trägt einen für das Kraftfahrzeug 1 berechtigten Schlüssel 9 bei sich. Der Schlüssel 9 wirkt dabei mit dem Kraftfahrzeug 1 zur Auslösung und/oder Freigabe bestimmter Funktionen des Kraftfahrzeugs 1 zusammen, ohne daß eine manuelle Betätigung des Schlüssels 9 durch den Benutzer 30 notwendig ist. Beispielsweise kann es sich bei diesen Funktionen um die Entriegelung einer oder aller Autotüren 6, der Freigabe zur Inbetriebnahme des Kraftfahrzeugs 1 o. dgl. handeln. Bevor auf spezielle Ausgestaltungen des Schließsystems als Türschließsystem und/oder als Zündschloßsystem für das Kraftfahrzeug 1 näher eingegangen wird, soll zunächst die allgemeine Funktionsweise des erfindungsgemäßen Schließsystems näher erläutert Wie aus Fig. 2 hervorgeht, besitzt das Schließsystem 2 eine wenigstens zwei Zustände aufweisende Steuereinrichtung 4 und einen zugehörigen elektronischen Schlüssel 9. Beispielsweise kann es sich bei dem einen Zustand der Steuereinrichtung 4 um "Autotüre 6 verriegelt" und beim anderen Zustand um "Autotüre 6 entriegelt" handeln. Das Kraftfahrzeug 1 enthält noch eine in Fig. 3 gezeigte weitere Steuereinrichtung 3 mit den beiden Zuständen "Zündschloß freigegeben" und "Zündschloß gesperrt". Ein erstes Sende-/Empfangsmittel 22 steht mit der Steuereinrichtung 4 in Verbindung, wie in Fig. 5 zu sehen ist. Ebenfalls steht mit der Steuereinrichtung 3 ein erstes Sende-/Empfangsmittel 23 in Verbindung. Der Schlüssel 9 besitzt ein zweites Sende-/Empfangsmittel 24. Somit ist zwischen dem ersten Sende-/Empfangsmittel 22, 23 und dem zweiten Sende-/Empfangsmittel 24 während des bestimmungsgemäßen Betriebs des Schlüssels 9 und der Steuereinrichtung 3, 4 wenigstens ein codiertes zweites Betriebssignal 11 übertragbar. Nach positiver Auswertung des übertragenen zweiten Betriebssignals 11 ist bei berechtigtem Schlüssel 9 eine Änderung des Zustandes der Steuereinrichtung 3, 4 bewirkbar.

Dem ersten Sende-/Empfangsmittel 22 ist wenigstens ein in Fig. 1 angedeuteter begrenzter Bereich 13 zugeordnet, in dem eine Übertragung des zweiten Betriebssignals 11 ermöglicht ist. Befindet sich der Schlüssel 9 nicht im bestimmungsgemäßen Betrieb, so ist die elektronische Schaltung des Schlüssels 9 in einem Ruhezustand mit verminderten Energieverbrauch. Dies ist beispielsweise dann der Fall, wenn der in Fig. 1 rechts dargestellte Benutzer 30 sich außerhalb des begrenzten Bereichs 13 befindet. Der bestimmungsgemäße Betrieb des Schlüssels 9 ist jedoch ohne Einwirkung des Benutzers 30 auf den Schlüssel 9 aktivierbar, wenn der Schlüssel 9 im begrenzten Bereich 13 befindlich ist, wie dies bei dem in Fig. 1 links dargestellten Benutzer 30 der Fall ist. Hervorzuheben ist folglich, daß eine Änderung des Zustandes der Steuereinrichtung 4 bei Betreten des begrenzten Bereiches 13 durch den Benutzer 30 mit berechtigtem Schlüssel 9 selbsttätig bewirkt wird, ohne daß eine manuelle Betätigung des Schlüssels 9 durch den Benutzer 30 notwendig ist.

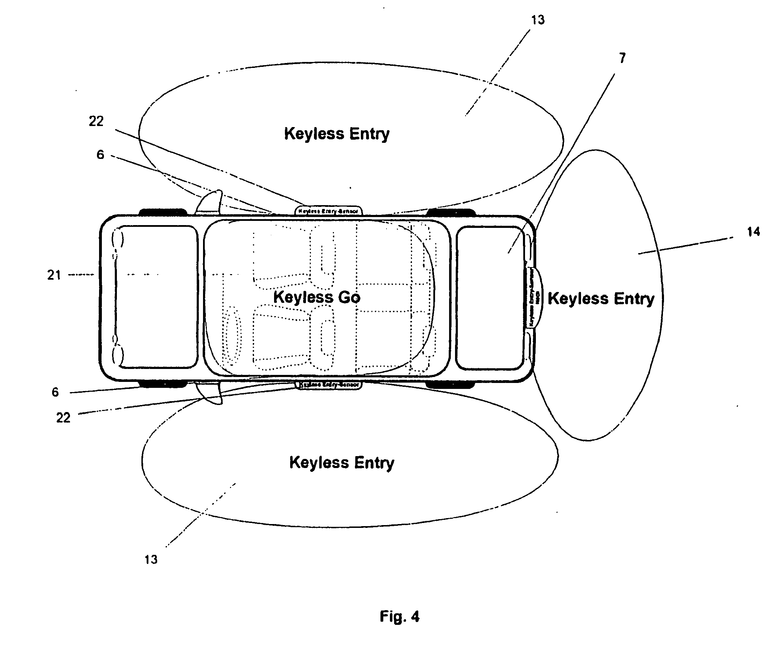

Wie in Fig. 4 zu sehen ist, ist dem ersten Sendemittel 23 für die Steuereinrichtung 3 ebenfalls ein begrenzter Bereich 21 zugeordnet, der den Innenraum des Kraftfahrzeugs 1 umfaßt. Außerdem ist neben den linken und rechten Autotüren 6, denen die Bereiche 13 zugeordnet sind, auch dem Kofferraumdeckel 7 ein begrenzter Bereich 14 zugeordnet. Auch in diesen weiteren Bereichen 13, 14, 21 erfolgt ebenfalls eine selbsttätige Einwirkung des Schlüssels 9 auf die jeweilige Steuereinrichtung 3, 4 des Schließsystems 2.

Zur Aktivierung des bestimmungsgemäßen Betriebs des Schlüssels 9 ist zweckmäßigerweise im begrenzten Bereich 13, 14, 21 ein weiteres, gegebenenfalls nichtcodiertes erstes Betriebssignal 10 von dem ersten Sende-/Empfangsmittel 22, 23 auf das zweite Sende-/Empfangsmittel 24 übertragbar, wie in Fig. 2 gezeigt ist. Das erste Betriebssignal 10 dient als eine Art von Wecksignal für die elektronische Schaltung im Schlüssel 9, so daß der Schlüssel 9 anschließend den bestimmungsgemäßen Betrieb aufnimmt.

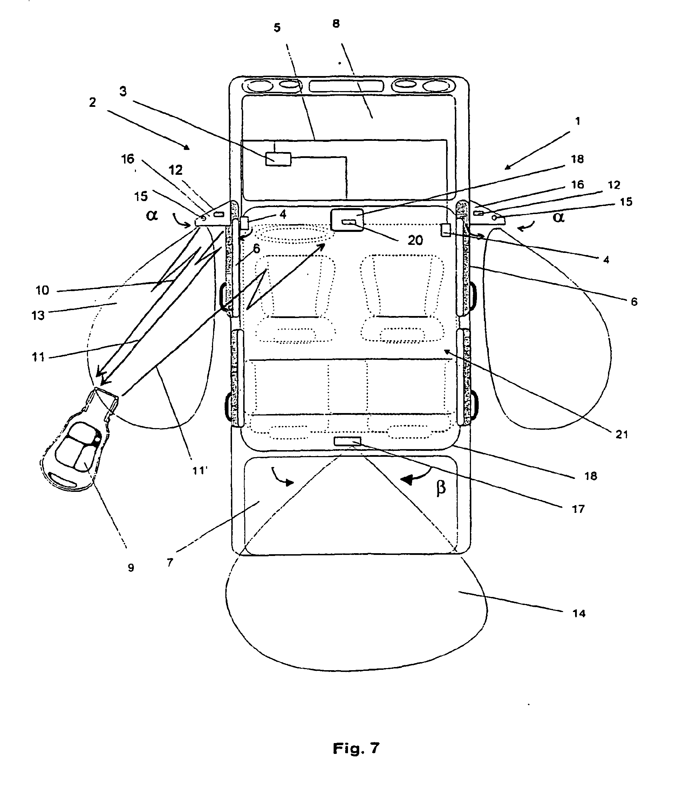

Damit die Steuereinrichtung 4 erkennen kann, daß ein Benutzer 30 mit berechtigtem Schlüssel 9 im begrenzten Bereich 13 befindlich ist, kann dem begrenzten Bereich ein in Fig. 7 gezeigtes Überwachungsmittel 15 zur Detektion der Annäherung eines Benutzers 30 an den begrenzten Bereich 13 und/oder zum Aufenthalt des Benutzers 30 im begrenzten Bereich 13 zugeordnet sein. Die Übertragung des als Wecksignal dienenden weiteren ersten Betriebssignals 10 ist dann aufgrund der Detektion des Benutzers 30 durch das Überwachungsmittel 15 auslösbar.

Eine andere Ausgestaltung besteht darin, daß dem begrenzten Bereich 13 ein von einem im begrenzten Bereich 13 befindlichen Benutzer 30 betätigbares Schaltmittel zugeordnet ist. Bei dem nicht weiter gezeigten Schaltmittel kann es sich beispielsweise um einen durch den Türgriff 35 (siehe Fig. 1) betätigbaren elektrischen Schalter handeln. Die Übertragung des weiteren ersten Betriebssignals 10 ist dann aufgrund der Betätigung des Schaltmittels durch den Benutzer 30 auslösbar. In nochmals einer anderen Ausgestaltung ist dem begrenzten Bereich 13 ein eine Aktion des Benutzers 30, wie das Betätigen des Türgriffes 35 o. dgl., detektierender Sensor zugeordnet, wobei dann das erste Betriebssignal 10 aufgrund der Detektion durch den Sensor auslösbar ist.

Wie oben ausgeführt, wird nach positiver Auswertung des übertragenen zweiten Betriebssignals 11 der Zustand der Steuereinrichtung 3, 4 geändert. Alternativ kann die Steuereinrichtung 3, 4 dann auch zunächst lediglich einen Freigabezustand einnehmen. Dem begrenzten Bereich 13, 14, 21 ist weiter eine von einem im begrenzten Bereich befindlichen Benutzer betätigbare Handhabe zugeordnet, bei der es sich beispielsweise um den Türgriff 35 (siehe Fig. 1) oder den Drehknopf 36 (siehe Fig. 3) für das Zündschloß handeln kann. Erst durch Betätigung der Handhabe ist die Änderung des Zustandes der Steuereinrichtung 3, 4 dann bewirkbar, wenn die Steuereinrichtung 3, 4 im Freigabezustand befindlich ist.

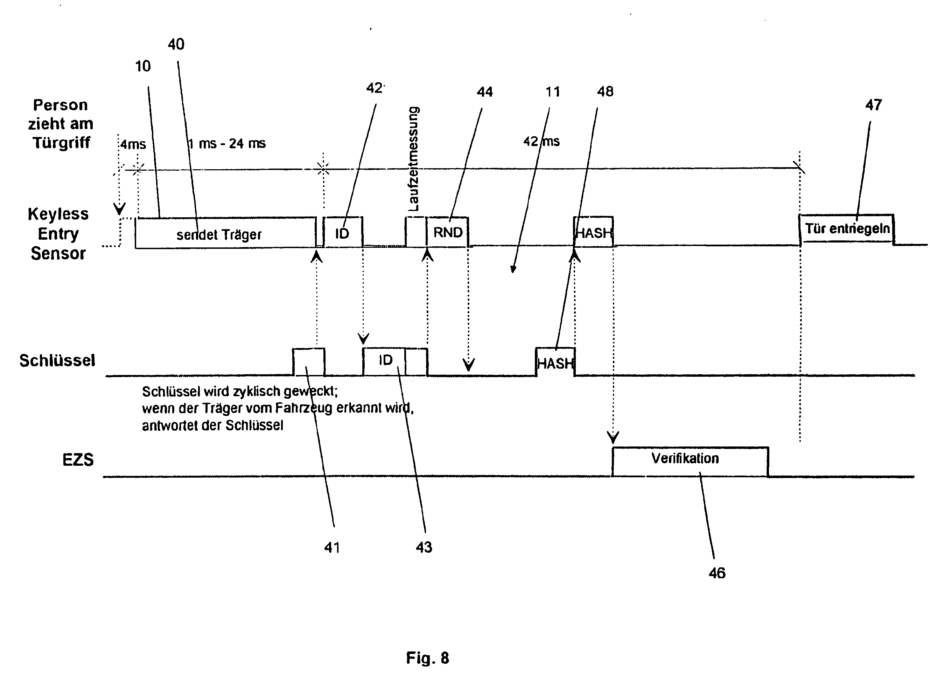

In Fig. 8 ist ein zeitliches Ablaufdiagramm für die Übertragung der Signale im begrenzten Bereich 13 näher gezeigt. Zunächst wird im begrenzten Bereich 13 vom ersten Sende-/Empfangsmittel 22 in der Steuereinrichtung 4 auf das zweite Sende-/Empfangsmittel 24 im Schlüssel 9 das erste Betriebssignal 10 übertragen. Das Aussenden des Betriebssignals 10 kann, wie bereits weiter oben erwähnt, durch Betätigen des Türgriffs 35 durch den Benutzer 30 ausglöst werden. Das als Wecksignal dienende erste Betriebssignal 10 besteht aus einem uncodierten und nicht modulierten Trägersignal 40. Nach Aktivierung des bestimmungsgemäßen Betriebs des Schlüssels 9 ist ein Rückmeldesignal 41 vom zweiten Sende-/Empfangsmittel 24 des Schlüssels 9 auf das erste Sende-/Empfangsmittel 22 in der Steuereinrichtung 4 übertragbar. Danach ist eine Identitäts-Kennung 42, bei der es sich beispielsweise um die Fahrzeug-Nummer handelt, vom ersten Sende-/Empfangsmittel 22 in der Steuereinrichtung 4 auf das zweite Sende-/Empfangsmittel 24 im Schlüssel 9 übertragbar. Danach kann wiederum eine Rückmelde-Kennung 43, beispielsweise die Fahrzeug-Nummer sowie die Schlüssel-Nummer, vom zweiten Sende-/Empfangsmittel 24 im Schlüssel 9 auf das erste Sende-/Empfangsmittel 22 in der Steuereinrichtung 4 rückübertragen werden. Da im allgemeinen mehrere Schlüssel 9 zum Kraftfahrzeug 1 gehören, wird dadurch der Steuereinrichtung 4 mitgeteilt, um welchen der Schlüssel 9 es sich handelt. Während diese Signale der Einfachheit halber unverschlüsselt übertragen werden können, erfolgt anschließend der Austausch des codierten zweiten Betriebsignals 11, vorzugsweise in einer bidirektionalen Kommunikation durch Übertragung einer Zufallszahl 44 und eines Codes 45, zwischen dem ersten Sende-/Empfangsmittel 22 in der Steuereinrichtung 4 und dem zweiten Sende-/Empfangsmittel 24 im Schlüssel 9. Zu näheren Einzelheiten im Hinblick auf die verschlüsselte bidirektionale Kommunikation wird beispielsweise auf die DE 43 40 260 A1 verwiesen. Nach der erfolgreichen Verifikation 46 des zweiten Betriebssignals 11, die beispielsweise in dem als Steuergerät 3 ausgebildeten Zündschloß vorgenommen wird, erfolgt die Türentriegelung 47.

Als Träger für die Signale werden elektromagnetische Wellen verwendet, denen die Informationen aufmoduliert sind. Soweit keine spezifischen Informationen zu übertragen sind, beispielsweise bei dem als Wecksignal dienenden ersten Betriebssignal 10 kann der Träger 40 auch unmoduliert gesendet werden. Bevorzugterweise handelt es sich bei dem vom ersten Sende-/Empfangsmittel 22, 23 für die Steuereinrichtung 3, 4 zum zweiten Sende-/Empfangsmittel 24 im Schlüssel 9 übertragenen Teil des ersten Betriebssignals 10 und/oder des zweiten Betriebssignals 11 und/oder eines weiteren Signals um elektromagnetische Wellen im Mikrowellen-Bereich, nämlich im GHz-Bereich. Der Träger für den vom zweiten Sende-/Empfangsmittel 24 im Schlüssel 9 zum ersten Sende-/Empfangsmittel 22, 23 für die Steuereinrichtung 3, 4 übertragenen Teil des ersten Betriebsssignals 10 und/oder des zweiten Betriebssignals 11 urd/oder eines weiteren Signals besteht ebenfalls aus elektromagnetischen Wellen im Mikrowellen-Bereich, wie im GHz-Bereich, oder auch aus solchen im Hochfrequenz-Bereich, wie im MHz-Bereich. Gegebenenfalls kann der Träger hier auch aus elektromagnetischen Wellen im induktiven Bereich, wie im KHz-Bereich, bestehen.

In einer bevorzugten Ausführungsform dient das Schließsystem 2 als Türschließ- und Zündschloßsystem für ein Kraftfahrzeug 1. Ein erster begrenzter Bereich 13, 14 umfaßt einen Teil des Außenbereichs des Kraftfahrzeugs 1 und ein zweiter begrenzter Bereich 21 wenigstens einen Teil des Kraftfahrzeug-Innenbereichs, wie anhand von Fig. 4 zu sehen ist. Das erste Betriebssignal 10 und das zweite Betriebssignal 11 ist im ersten und zweiten begrenzten Bereich 13, 14, 21 zumindestens in Richtung von dem ersten Sende-/Empfangsmittel 22, 23 in der Steuereinrichtung 3, 4 zum zweiten Sende-/Empfangsmittel 24 im Schlüssel 9 mit einem aus elektromagnetischen Wellen im Mikrowellen-Bereich, insbesondere im GHz-Bereich, bestehenden Träger übertragbar.

In einer anderen bevorzugten Ausführungsform des Türschließ- und Zündschloßsystems für ein Kraftfahrzeug 1 gemäß Fig. 5 umfaßt ein erster begrenzter Bereich 13, 14 einen Teil des Außenbereichs des Kraftfahrzeugs 1. Ein zweiter begrenzter Bereich 21 umfaßt wenigstens einen Teil des Kraftfahrzeug-Innenbereichs. Das erste Betriebssignal 10 und das zweite Betriebssignal 11 werden im ersten begrenzten Bereich 13, 14 zumindestens in Richtung von dem ersten Sende-/Empfangsmittel 22 in der Steuereinrichtung 4 zum zweiten Sende-/Empfangsmittel 24 im Schlüssel 9 mit einem aus elektromagnetischen Wellen im Mikrowellen-Bereich, insbesondere im GHz-Bereich, bestehenden Träger übertragen. Weiter wird jedoch im zweiten begrenzten Bereich 21, also im Innenraum des Kraftfahrzeugs 1, das zweite Betriebssignal 11 sowie gegebenenfalls das erste Betriebssignal 10 zumindestens in Richtung von dem ersten Sende-/Empfangsmittel 23 in der Steuereinrichtung 3 zum zweiten Sende-/Empfangsmittel 24 im Schlüssel 9 mit einem aus elektromagnetischen Wellen im induktiven Bereich, insbesondere im KHz-Bereich, bestehenden Träger übertragen.

Der im Außenbereich des Kraftfahrzeugs 1 befindliche erste begrenzte Bereich 13, 14 ist einem verschließbaren Element, wie der Autotüre 6, dem Kofferraumdeckel 7 o. dgl., zugeordnet. Eine Entriegelung des verschließbaren Elements wird in der Regel nur außerhalb des Kraftfahrzeugs 1 und in der unmittelbaren Umgebung des verschließbaren Elements gewünscht. Es bietet sich hierfür an, daß der erste begrenzte Bereich 13, 14 eine von der Kreissymmetrie abweichende Ausrichtung besitzt, insbesondere eine in etwa keulenförmige Ausrichtung am Kofferraumdeckel 7 oder doppelkeulenförmige Ausrichtung an den Autotüren 6, wie näher aus Fig. 4 hervorgeht. Somit erstreckt sich der erste begrenzte Bereich 13, 14 im wesentlichen einseitig benachbart zum verschließbaren Element. Eine solche keulen- oder doppelkeulenförmige Ausrichtung des ersten begrenzten Bereichs 13, 14 ergibt sich insbesondere bei der Verwendung von elektromagnetischen Wellen im GHz-Bereich als Träger für die Betriebssignale 10, 11.

Es bietet sich hierbei an, einen Sensor für elektromagnetische Strahlung, der aus einer in Fig. 7 gezeigten Antenne 12, 17 mit gegebenenfalls zugehöriger Elektronik bestehen kann, für das Sende-/Empfangsmittel 22 der Steuereinrichtung 4 für den im Außenbereich des Kraftfahrzeugs 1 befindlichen ersten begrenzten Bereich 13, 14 in der Rammschutzleiste an der Autotüre 6 anzuordnen, wie in Fig. 4 angedeutet ist. Alternativ kann die Anordnung auch am Außenspiegel 16 gemäß Fig. 7, im Türgriff 35, in dem hinteren Stoßfänger und/oder an der Heckscheibe 18 des Kraftfahrzeugs bzw. an einer sonstigen zweckmäßigen Stelle des Kraftfahrzeug-Äusseren vorgesehen sein. Ein weiterer Sensor für elektromagnetische Strahlung für das Sende-/Empfangsmittel 23 der Steuereinrichtung 3 für den im Innenbereich des Kraftfahrzeugs 1 befindlichen zweiten begrenzten Bereich 21 befindet sich am Dachhimmel. Alternativ kann der Sensor auch am Innenspiegel, in der Mittelkonsole, und/oder an der Heckablage des Kraftfahrzeugs 1 bzw. an einer sonstigen zweckmäßigen Stelle im Kraftfahrzeug-Inneren befindlich sein.

Unter Umständen kann eine gezielte Einwirkung durch den Benutzer auf die Steuereinrichtung 4 auch von außerhalb des begrenzten Bereichs 13, 14 in größerer Entfernung vom Kraftfahrzeug 1 gewünscht sein. Hierzu bietet es sich an, daß mittels eines in Fig. 1 gezeigten, weiteren Signals 25, das vom Schlüssel 9 bei Auslösung durch den Benutzer 30 in der Art einer Fernbedienung aussendbar ist, die Steuereinrichtung 4 zur Einwirkung auf das verschließbare Element von außerhalb des ersten begrenzten Bereichs 13, 14 betätigbar ist. Zur näheren Ausgestaltung einer derartigen Fernbedienung wird beispielhaft wiederum auf die DE 43 40 260 A1 verwiesen.

Im folgenden sollen noch zwei spezielle Ausführungsformen für ein erfindungsgemäßes Schließsystem 2 an einem Kraftfahrzeug 1 näher erläutert werden.

In Fig. 7 ist in der einen speziellen Ausgestaltung ein Schließsystem 2 als Türschließsystem an einem Kraftfahrzeug 1 näher zu sehen. Das Schließsystem 2 umfaßt eine Steuereinrichtung 3, die zur Einwirkung auf ein verschließbares Element dient. Vorliegend steht die Steuereinrichtung 3 mit Türsteuergeräten 4 über ein Bussystem 5 in Verbindung, wobei die Türsteuergeräte 4 die Ent- und/oder Verriegelung der Autotüren 6 sowie des Kofferraumdeckels 7 bewirken. Gegebenenfalls können auch noch weitere Elemente des Kraftfahrzeugs, wie die Motorhaube 8 o. dgl. von einem entsprechenden Steuergerät betätigbar sein, was jedoch nicht weiter gezeigt ist.

Das Schließsystem 2 umfaßt weiter einen zugehörigen elektronischen Schlüssel 9. Die Steuereinrichtung 3 und der Schlüssel 9 besitzen zu deren bestimmungsgemäßen Betrieb Sende- und/oder Empfangsmittel, mit deren Hilfe zwischen dem Schlüssel 9 und der Steuereinrichtung 3 wenigstens ein codiertes Betriebssignal 11, 11' übertragbar ist. Nach positiver Auswertung des übertragenen Betriebssignals 11, 11' ist die Steuereinrichtung 3 zur Einwirkung auf das verschließbare Element freigebbar.

Die Antenne 12 als das eigentliche Sendemittel der Steuereinrichtung 3 ist derart in der Nähe des verschließbaren Elements angeordnet, daß ein von der Steuereinrichtung 3 erzeugtes erstes Betriebssignal 10 in einem dem verschließbaren Element zugeordneten Bereich 13 vom Schlüssel 9 zu empfangen ist. Dieser dem verschließbaren Element zugeordnete Bereich 13 besitzt eine von der Kreissymmetrie abweichende Ausrichtung, die in in etwa keulenförmig ausgestaltet ist. Dadurch erstreckt sich der zugeordnete Bereich 13 lediglich einseitig benachbart zum verschließbaren Element.

Nach Empfang des ersten Betriebssignals 10 ist der Schlüssel 9 in einen aktivierten Zustand versetzbar, d.h. der zuvor im Ruhezustand befindliche Schlüssel 9 wird durch das erste Betriebssignal 10 aufgeweckt. Im aktivierten Zustand des Schlüssels 9 sind dann weitere zweite Betriebssignale 11, 11' zwischen der Steuereinrichtung 3 und dem Schlüssel 9 austauschbar. Hierbei handelt es sich um codierte Signale, nach deren positiver Auswertung dann die Freigabe der Steuereinrichtung 3 erfolgt. Nach Austausch des zweiten Betriebssignals 11, 11' mit der Steuereinrichtung 3 sowie gegebenenfalls einer Wartezeit ist der Schlüssel 9 dann aus dem aktiviertem Zustand wiederum in den Ruhezustand rücksetzbar, wobei der Schlüssel 9 im Ruhezustand einen verminderten Energieverbrauch besitzt.

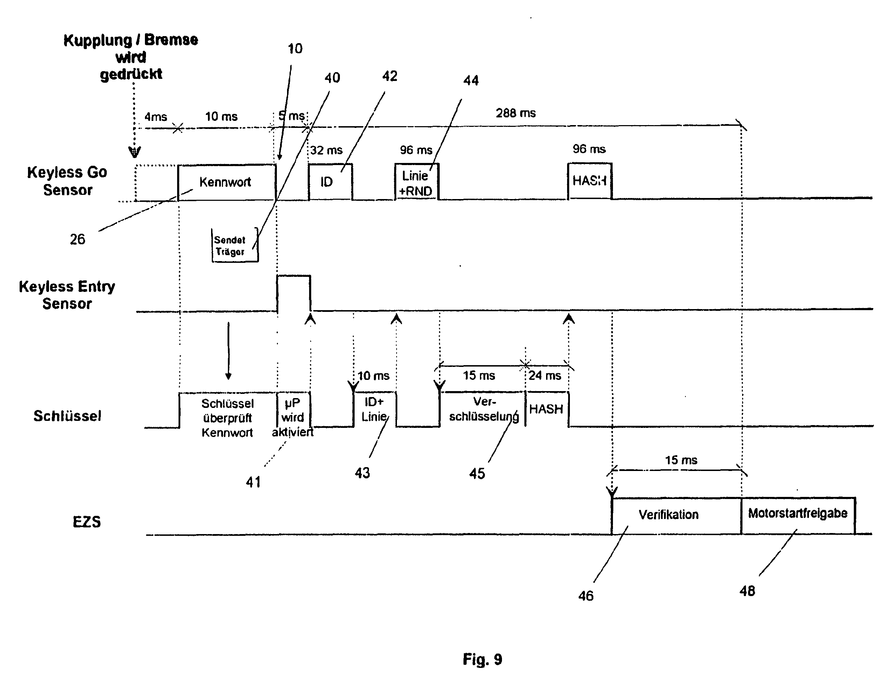

Befindet sich ein nicht zum Schließsystem 2 zugehöriger Schlüssel im Bereich 13, so führt der Austausch der zweiten Betriebssignale 11, 11' zu einer negativen Auswertung des Codes, so daß keine Freigabe der Steuereinrichtung 3 erfolgen kann. Um jedoch zur Energieeinsparung in diesem Fall bereits den Austausch der zweiten Betriebssignale 11, 11' zu verhindern, kann das erste Betriebssignal 10 eine für den jeweilig zugeordneten Schlüssel 9 spezifische Kennung 26 (siehe Fig. 9) enthalten, wozu beispielsweise das erste Betriebssignal 10 oder ein Teil des ersten Betriebssignals 10 entsprechend moduliert ist. Im aktivierten Zustand ist das vom Schlüssel 9 empfangene erste Betriebssignal 10 vom Schlüssel 9 bereits auf die Kennung auswertbar. Lediglich bei Vorliegen der richtigen spezifischen Kennung 26 wird dann das zweite Betriebssignal 11' vom Schlüssel 9 auf die Steuereinrichtung 3 übertragen.

Die Steuereinrichtung 3 kann das erste Betriebssignal 10 zyklisch aussenden. Um eine weitere Energieeinsparung zu erreichen, ist es vorteilhaft, einen Näherungssensor 15 für den Bereich 13 anzuordnen. Ein solcher Näherungssensor 15 kann mit Hilfe des Dopplereffekts arbeiten. Der Näherungssensor 15 löst bei Detektion einer annähernden Bewegung eines Benutzers die Aussendung des ersten Betriebssignals 10 durch die Steuereinrichtung 3 aus.

Bei den ersten und zweiten Betriebssignalen 10, 11, 11' handelt es sich um elektromagnetische Wellen, insbesondere um Funkwellen. Bevorzugterweise handelt es sich bei den von der Steuereinrichtung 3 zum Schlüssel 9 übertragenen Betriebssignalen 10, 11 um elektromagnetische Wellen im Mikrowellenbereich. Die Mikrowellen besitzen eine Frequenz im Gigahertz-Bereich zwischen 2 und 30 GHz. Zweckmäßig sind beispielsweise 5 oder 24 GHz. Derartige Mikrowellen besitzen eine derartige Strahlungscharakteristik, daß ein keulenförmiger Bereich 13 resultiert. Weiterhin ist bevorzugt, wenn es sich bei dem von dem Schlüssel 9 auf die Steuereinrichtung 3 übertragenen Betriebssignalen 11' um elektromagnetische Wellen mit einer Frequenz im Megahertz-Bereich, beispielsweise von 433 MHz, handelt.

Je eine Antenne 12 für das Sendemittel der Steuereinrichtung 3 ist an den Außenspiegeln 16 des Kraftfahrzeugs 1 angeordnet. Damit ist den Autotüren 6 beidseitig am Kraftfahrzeug 1 jeweils ein Bereich 13 für den Empfang des ersten Betriebssignals 10 zugeordnet. Eine weitere Antenne 17 ist an der Heckscheibe 18 des Kraftfahrzeugs 1 angeordnet. Dieser Antenne 17 ist ein Bereich 14 für den Kofferraumdeckel 7 zugeordnet. Als Antennen 12, 17 werden eine Richtwirkung besitzende Planarantennen verwendet. Das Empfangsmittel der Steuereinrichtung 3 ist als Innenempfänger 19 im Kraftfahrzeug ausgebildet, wobei die Antenne 20 des Empfangsmittel am Innenspiegel des Kraftfahrzeugs angebracht sein kann.

Der dem verschließbaren Element zugeordnete Bereich 13 ist in der Form einer von einem Außenspiegel 16 oder auch beiden Außenspiegeln 16 des Kraftfahrzeugs 1 abgehenden Keule ausgebildet. Der Öffnungswinkel α der Keule beträgt wenigstens 70 Grad. Wie anhand von Fig. 4 ersichtlich ist, kann der dem verschließbaren Element zugeordnete Bereich 13 auch in der Form einer in etwa in der Fahrzeugmitte von den Autotüren 6 abgehenden Doppelkeule ausgebildet sein. Der Öffnungswinkel α der Doppelkeule beträgt dabei ungefähr 180 Grad. Der weitere, einem verschließbaren Element zugeordnete Bereich 14 ist gemäß Fig. 7 ebenfalls in der Form einer von der Heckscheibe 18 des Kraftfahrzeug 1 abgehenden Keule ausgebildet, wobei der Öffnungswinkel β der Keule wenigstens 90 Grad beträgt. Die Reichweite der jeweiligen Keule, d.h. die Reichweite mit der das erste Betriebssignal 10 vom Schlüssel 9 zu empfangen ist, beträgt wenigstens 1,5 m, insbesondere bis zu ungefähr 3 m.

Zweckmäßigerweise führt die Einwirkung der Steuereinrichtung 3 auf die Autotüren 6 oder den Kofferraumdeckel 7 nicht unmittelbar zur Entriegelung derselben. Vielmehr erfolgt die Entriegelung nach Freigabe der Steuereinrichtung 3 bei Betätigung eines Handgriffs oder einer sonstigen Handhabe.

Als zusätzliche Sicherheitseinrichtung kann der Schlüssel 9 mit Mitteln für eine benutzerspezifische Freigabe versehen sein. Es kann sich hierbei um Mittel zur Erkennung des Fingerabdrucks, der Sprache o. dgl. des zugeordneten Benutzers handeln. Der Schlüssel 9 ist dann erst nach erfolgter benutzerspezifischer Freigabe durch das erste Betriebssignal 10 in den aktivierten Zustand umschaltbar.

In einer Erweiterung des Schließsystems 2 oder auch alternativ kann das Schließsystem 2 auch zur Betätigung für ein Zündschloßsystem an einem Kraftfahrzeug dienen. Hierzu sind Mittel im Kraftfahrzeug 1 zur Detektierung des Schlüssels 9 im Innenraum 21 des Kraftfahrzeugs 1 angeordnet. Befindet sich der Schlüssel 9 im Innenraum 21, so werden Betriebssignale zwischen dem Schlüssel 9 und einer Steuereinrichtung für das Zündschloß zur Freigabe des Zündschlosses ausgetauscht. Zweckmäßigerweise erfolgt der Austausch dieser Betriebssignale über den Innenempfänger 19. Das Starten des Kraftfahrzeuges 1 wird nach Freigabe des Zündschlosses beispielsweise mittels Betätigung einer Taste durch den Benutzer vorgenommen.

In Fig. 1, 5 und 6 ist der anderen speziellen Ausgestaltung ein Kraftfahrzeug 1 zu sehen, dem sich ein Benutzer 2 nähert. Das Kraftfahrzeug 1 ist mit einem Schließsystem 2 als Türschließsystem versehen, das in Fig. 5 gezeigt ist. Zur näheren Ausbildung des Türschließsystems, zu dem Türsteuergeräte 4 für die Autotüren 6, den Kofferraumdeckel 7 sowie die Motorhaube 8 und ein Bussystem 5 zugehörig sind, wird auf die obigen Ausführungen verwiesen.

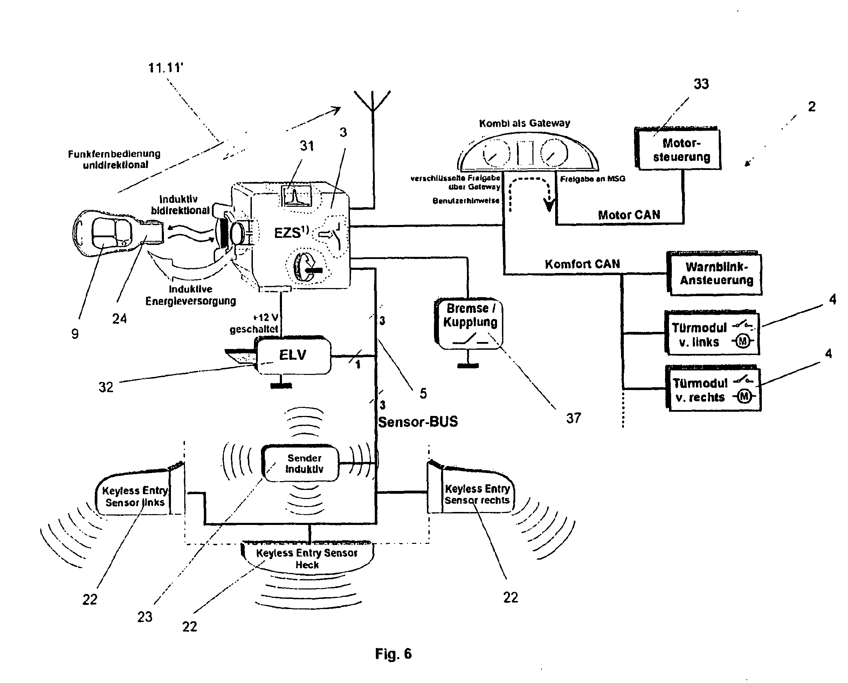

Wie aus Fig. 5 und 6 hervorgeht, dient das Schließsystem 2 weiter als Zündschloßsystem und umfaßt eine wenigstens zwei Zustände besitzende Steuereinrichtung 3 sowie einen zugehörigen elektronischen Schlüssel 9. Die zur Ent- und/oder Verriegelung des Zündschlosses 31, der Lenkradverrriegelung 32, einer im Motorsteuergerät 33 angeordneten Wegfahrsperre o. dgl. dienende Steuereinrichtung 3 und der Schlüssel 9 besitzen zu deren bestimmungsgemäßen Betrieb Sende- und/oder Empfangsmittel, mit deren Hilfe zwischen dem Schlüssel 9 und der Steuereinrichtung 3 wenigstens ein codiertes Betriebssignal 11, 11' übertragbar ist. Nach positiver Auswertung des übertragenen Betriebssignals 11, 11' ist eine Änderung des Zustandes der Steuereinrichtung 3 bewirkbar, so daß beispielsweise das Zündschloß 31 durch die Steuereinrichtung 3 freigegeben wird.

Für die Türschließung besitzt das Schließsystem 2 ein erstes, dem Außenraum des Kraftfahrzeugs 1 zugeordnetes Sendemittel 22. Das Sendemittel 22 steht mit der Steuereinrichtung 3 in Verbindung und ist derart in der Nähe des verschließbaren Elements angeordnet, beispielsweise im Außenspiegel, in einer Zierleiste, in der Autotüre, im Türholm, im Türgriff o. dgl., daß ein von der Steuereinrichtung 3 erzeugtes erstes Betriebssignal 10 in einem dem verschließbaren Element zugeordneten Bereich 13, 14 vom Schlüssel 9 zu empfangen ist. Dieser dem verschließbaren Element zugeordnete Bereich 13 besitzt eine von der Kreissymmetrie abweichende Ausrichtung, so daß sich der zugeordnete Bereich 13, 14 im wesentlichen einseitig benachbart zum verschließbaren Element erstreckt.

Nach Empfang des ersten Betriebssignals 10 ist der Schlüssel 9 in einen aktivierten Zustand versetzbar, d.h. der zuvor im Ruhezustand befindliche Schlüssel 9 wird durch das erste Betriebssignal 10 aufgeweckt. Im aktivierten Zustand des Schlüssels 9 sind dann weitere zweite Betriebssignale 11, 11' zwischen der Steuereinrichtung 3 und dem Schlüssel 9 austauschbar. Hierbei handelt es sich um codierte Signale, nach deren positiver Auswertung dann die Zustandsänderung der Steuereinrichtung 3 erfolgt. Nach Austausch des zweiten Betriebssignals 11, 11' mit der Steuereinrichtung 3 sowie gegebenenfalls einer Wartezeit ist der Schlüssel 9 dann aus dem aktiviertem Zustand wiederum in den Ruhezustand rücksetzbar, wobei der Schlüssel 9 im Ruhezustand einen verminderten Energieverbrauch besitzt. Der nähere zeitliche Ablauf für die Übermittlung der ersten und zweiten Betriebssignale 10, 11, 11' geht aus Fig. 9 hervor, wobei hierzu auch auf die bereits zu Fig. 8 gemachten Ausführungen verwiesen wird.

Die Aussendung des ersten Betriebssignals 10 kann bereits bei Annäherung des Benutzers 30 an das Kraftfahrzeugs 1 erfolgen, wie in Fig. 1 gezeigt ist, oder auch aufgrund einer bestimmten Aktion des Benutzers 30, wie beispielsweise durch das Betätigen des Türgriffes 35. Am Kraftfahrzeug 1 befindet sich hierzu ein diese Aktion detektierender, nicht näher gezeigter Sensor. Aufgrund der Detektion durch diesen Sensor ist dann die Aussendung des ersten Betriebssignals 10 vom ersten Sendemittel 22 auslösbar.

Für die Freigabe des Zündschlosses 31 besitzt das Schließsystem 2 ein weiteres, dem Innenraum 21 des Kraftfahrzeugs 1 zugeordnetes erstes Sendemittel 23, das mit der Steuereinrichtung 3 in Verbindung steht. Wiederum ist ein erstes Betriebssignal 10 vom Sendemittel 23 zur Aktivierung des Schlüssels 9 erzeugbar. Analog zu der bereits oben gegebenen Beschreibung erfolgt dann durch Austausch der Betriebssignale 11, 11' eine Zustandsänderung der Steuereinrichtung 3, so daß das Kraftfahrzeug 1 in Betrieb genommen werden kann.

Beim ersten Betriebssignal 10 handelt es sich um elektromagnetische Wellen. Falls gewünscht, kann auch das zweite Betriebssignal 11, 11' aus elektromagnetischen Wellen bestehen, beispielsweise aus Funkwellen mit einer Frequenz im MHz-Bereich. Während zur Erzielung der Richtwirkung im Bereich 13, 14 das Sendemittel 22 insbesondere mit Mikrowellen im GHz-Bereich arbeitet, kann das Sendemittel 23 induktiv mit einer Frequenz im kHz-Bereich arbeiten. Das Sendemittel 23 kann in der Mittelkonsole, am Kraftfahrzeugdach, an der Heckablage, am Armaturenbrett, am Innenspiegel o. dgl. im Kraftfahrzeug 1 angeordnet sein.

Zur Auslösung der Aussendung des ersten Betriebssignals 10 durch das Sendemittel 23 ist im Kraftfahrzeug 1 ein die Anwesenheit des Benutzers 30 und/oder eine Aktion des Benutzers 30 im Innenraum 21 detektierender, nicht näher gezeigter Sensor angeordnet. Eine derartige Aktion ist beispielsweise das Betätigen des Brems- und/oder Kupplungspedals 37, wie auch anhand von Fig. 9 ersichtlich ist. Nach positiver Auswertung der zweiten Betriebssignale 11, 11' erfolgt dann die Motorstartfreigabe 48.

In einer Weiterbildung kann der Schlüssel 9 einen Speicher besitzen. In diesen Speicher werden der jeweils zuletzt eingenommene Zustand der Steuereinrichtung 3 und/oder Zustand des Kraftfahrzeugs 1 und/oder sonstige Informationen, wie "Motor läuft", "Tür entriegelt" o. dgl., automatisch eingespeichert, wobei der Inhalt des Speichers durch den Benutzer 30 nicht veränderbar ist. Der Speicherinhalt kann beispielsweise als Nachweis einer Manipulation beim Diebstahl des Kraftfahrzeugs 1 dienen.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. Ein derartiges Schließsystem kann kombiniert für die Autotüren und das Zündschloß verwendbar sein sowie auch alternativ als Türschließsystem oder als Zündschloßsystem ausgebildet sein, wie oben ausführlich beschrieben ist. Weiterhin kann ein derartiges Schließsystem auch an Gebäuden o. dgl. Verwendung finden, um eine ohne manuelle Betätigung durch den Benutzer erfolgende Zugangsberechtigung bereitzustellen.

## Patentansprüche

1. Schließsystem, insbesondere Türschließsystem zur Zugangsberechtigung und/oder Zündschloßsystcm zur Fahrberechtigung für ein Kraftfahrzeug (1), mit einer wenigstens zwei Zustände besitzenden Steuereinrichtung (3, 4), mit der erste Sende-/Empfangsmittel (22, 23) in Verbindung stehen, und einem zugehörigen elektronischen Schlüssel (9), der zweite Sende-/Empfangsmittel (24) besitzt, wobei während des bestimmungsgemäßen Betriebs des Schlüssels (9) und der Steuereinrichtung (3, 4) Betriebssignale (10, 11, 11') zwischen dem ersten und zweiten Sende-/Empfangsmittel (22, 23, 24) übertragbar sind, wobei dem ersten Sende-/Empfangsmittel (22, 23) wenigstens ein begrenzter Bereich (13, 14, 21) zugeordnet ist, in dem eine Übertragung der Bctricbssignale (10, 11, 11') ermöglicht ist, wobei der bestimmungsgemäße Betrieb des Schlüssels (9) ohne Einwirkung eines Benutzers (30) auf den Schlüssel (9) durch Übertragung eines ersten Betriebssignals (10) von dem ersten Sende-/Empfangsmittel (22, 23) auf das zweite Sende-/Empfangsmittel (24) aktivierbar ist, wenn der Schlüssel (9) im begrenzten Bereich (13,14,21) befindlich ist, und wobei nach Aktivierung des bestimmungsgemäßen Betriebs des Schlüssels (9) wenigstens ein codiertes zweites Betriebssignal (11, 11') zwischen dem ersten und zweiten Sende-/Empfangsmittel (22, 23, 24) übertragbar ist, so daß nach positiver Auswertung des übertragenen zweiten Betriebssignals (11, 11') bei berechtigtem Schlüssel (9) eine Änderung des Zustandes der Steuereinrichtung (3, 4) bewirkbar ist, **dadurch gekennzeichnet, daß** wenigstens der vom ersten Sende-/Empfangsmittel (22, 23) für die Steuereinrichtung (3, 4) zum zweiten Sendc-/Empfangsmittel (24) im Schlüssel (9) übertragene Teil des ersten Betriebssignals (10) sowie der vom ersten Sende-/Empfangsmittel (22, 23) für die Steuereinrichtung (3, 4) zum zweiten Sende-/Empfangsmittel (24) im Schlüssel (9) übertragene Teil des zweiten Betriebssignals (11, 11') und/oder eines weiteren Signals mit einem aus elektromagnetischen Mikrowellen im GHz-Bereich bestehenden Träger übertragbar ist.

2. Schließsystem nach Anspruch 1, **dadurch gekennzeichnet, daß** das erste Betriebssignal (10) als nichtcodiertes Wecksignal übertragbar ist.

3. Schließsystem nach Anspruch 1 oder 2, **dadurch gekennzeichnet, daß** dem begrenzten Bereich (13, 14, 21) ein Überwachungsmittel (15) zur Detektion der Annäherung eines Benutzers (30) an den begrenzten Bereich (13, 14, 21) und/oder zum Aufenthalt des Benutzers (30) im begrenzten Bereich (13, 14, 21) zugeordnet ist, wobei die Übertragung des weiteren ersten Betriebssignals (10) aufgrund der Detektion des Benutzers (30) durch das Überwachungsmittel (15) auslösbar ist.

4. Schließsystem nach Anspruch 1, 2 oder 3, **dadurch gekennzeichnet, daß** dem begrenzten Bereich (13, 14, 21) ein von einem im begrenzten Bereich (13, 14, 21) befindlichen Benutzer (30) betätigbares Schaltmittel und/oder einen eine Aktion des Benutzers (30), wie das Betätigen des Türgriffes (35) oder das Betätigen des Brems- und/oder Kupplungspedals, detektierenden Sensor zugeordnet ist, wobei die Übertragung des weiteren ersten Betriebssignals (10) aufgrund der Betätigung des Schaltmittels und/oder aufgrund der Detektion durch den Sensor auslösbar ist.

5. Schließsystem nach einem der Ansprüche 1 bis 4, **dadurch gekennzeichnet, daß** nach positiver Auswertung des übertragenen zweiten Betriebssignals (11, 11') die Steuereinrichtung (3, 4) zunächst einen Freigabezustand einnimmt, daß dem begrenzten Bereich (13, 14, 21) eine von einem im begrenzten Bereich (13, 14, 21) befindlichen Benutzer (30) betätigbare Handhabe zugeordnet ist, und daß durch Betätigung der Handhabe die Änderung des Zustandes der Steuereinrichtung (3, 4), wie das Entriegeln der Autotüren (6) und/oder das Starten des Kraftfahrzeugs mittels Betätigung einer Taste (36) durch den Benutzer (30), dann bewirkbar ist, wenn die Steuereinrichtung (3, 4) im Freigabezustand befindlich ist.

6. Schließsystem nach einem der Ansprüche 1 bis 5, **dadurch gekennzeichnet, daß** nach Aktivierung des bestimmungsgemäßen Betriebs des Schlüssels (9) ein Rückmeldesignal (41) vom zweiten Sende-/Empfangsmittel (24) auf das erste Sende-/Empfangsmittel (22, 23) übertragbar ist, daß danach eine Identitäts-Kennung (42), beispielsweise die Fahrzeug-Nummer, vom ersten Sende-/Empfangsmittel (22, 23) auf das zweite Sende-/Empfangsmittel (24) übertragbar ist, daß danach eine Rückmelde-Kennung (43), beispielsweise die Fahrzeug-Nummer und die Schlüssel-Nummer, vom zweiten Sende-/Empfangsmittel (24) auf das erste Sende-/Empfangsmittel (22, 23) rückübertragbar ist, und daß anschließend das zweite Betriebssignal (11, 11'), vorzugsweise in einer bidirektionalen Kommunikation, zwischen dem ersten und zweiten Sende-/Empfangsmittel (22, 23, 24) austauschbar ist.

7. Schließsystem nach einem der Ansprüche 1 bis 6, **dadurch gekennzeichnet, daß** der vom zweiten Sende-Empfangsmittel (24) im Schlüssel (9) zum ersten Sende-/Empfangsmittel (22, 23) für die Steuereinrichtung (3,4) übertragene Teil des ersten Betriebssignals (10) und/oder des zweiten Betriebssignals (11, 11') und/oder eines weiteren Signals mit einem aus elektromagnetischen Mikrowellen im GHz-Bereich bestehenden Träger übertragbar ist.

8. Schließsystem nach einem der Ansprüche 1 bis 6, **dadurch gekennzeichnet, daß** der vom zweiten Sende-/Empfangsmittel (24) im Schlüssel (9) zum ersten Sende-/Empfangsmittel (22, 23) für die Steuereinrichtung (3, 4) übertragene Teil des ersten Betriebssignals (10) und/oder des zweiten Betriebssignals (11, 11') und/oder eines weiteren Signals mit einem aus elektromagnetischen Wellen im Hochfrequenz-Bereich, wie im MHz-Bereich, oder einem aus elektromagnetischen Wellen im induktiven Bereich, wie im KHz-Bereich, bestehenden Träger übertragbar ist.

9. Schließsystem nach einem der Ansprüche 1 bis 8, **dadurch gekennzeichnet, daß** der begrenzte Bereich als erster begrenzter Bereich (13,14) einen Teil des Außenbereichs des Kraftfahrzeugs (1) umfaßt, daß der erste begrenzte Bereich (13,14) einem durch Einwirkung der Steuereinrichtung (3, 4) verschließbaren Element, wie der Autotüre (6) oder dem Kofferraumdeckel (7), zugeordnet ist und eine von der Kreissymmetrie abweichende, in etwa keulenförmige oder doppclkculenförmige Ausrichtung besitzt, derart daß sich der erste begrenzte Bereich (13,14) im wesentlichen einseitig benachbart zum verschließbare Element erstreckt, und daß ein Sensor für elektromagnetische Strahlung für das Sende-/Empfangsmittel (22) der Steuereinrichtung (4) für den ersten begrenzten Bereich (13, 14) am Außenspiegel (16), im Türgriff (35), in der Rammschutzleiste an der Autotüre (6), in dem hinteren Stoßfänger und/oder an der Heckscheibe (18) des Kraftfahrzeugs (1) angeordnet ist.

10. Schließsystem nach Anspruch 9, **dadurch gekennzeichnet, daß** der erste Bereich (13) in der Form einer von einem Außenspiegel (16) oder beiden Außenspiegeln (16) des Kraftfahrzeugs (1) abgehenden Keule ausgebildet ist, wobei der Öffnungswinkel der Keule wenigstens 70 Grad beträgt, und/oder daß der erste Bereich (13) in der Form einer von den Autotüren (6) abgehenden Doppelkeule ausgebildet ist, wobei der Öffnungswinkel der Doppelkeule ungefähr 180 Grad beträgt, und/oder daß erste Bereich (14) in der Form einer von der Heckscheibe (18) des Kraftfahrzeugs (1) abgehenden Keule ausgebildet ist, wobei der Öffnungswinkel der Keule wenigstens 90 Grad beträgt, und daß die Reichweite der jeweiligen Keule wenigstens 1,5 m und bis zu 3 m beträgt.

11. Schließsystem nach einem der Ansprüche 1 bis 10, **dadurch gekennzeichnet, daß** mittels eines weiteren Signals (25), das vom Schlüssel (9) bei Auslösung durch den Benutzer (30) in der Art einer Fernbedienung aussendbar ist, die Steuereinrichtung (4) zur Einwirkung auf das verschließbare Element von außerhalb des ersten begrenzten Bereichs (13, 14) betätigbar ist

12. Schließsystem nach einem der Ansprüche 1 bis 11, **dadurch gekennzeichnet, daß** der begrenzte Bereich als zweiter begrenzter Bereich (21) wenigstens einen Teil des Kraftfahrzeug-Innenbereichs umfaßt, daß der zweite begrenzte Bereich (21) einem durch Einwirkung der Steuereinrichtung (3) sperrbaren Element, wie dem Zündschloß (31), der Lenkradverriegelung (32) oder einer Wegfahrsperre, zugeordnet ist, und daß ein Sensor für elektromagnetische Strahlung für das Sendc-/Empfangsmittel (23) der Steuereinrichtung (3) für den zweiten begrenzten Bereich (21) am Innenspiegel, in der Mittelkonsole, arm Dachhimmel und/oder an der Heckablage des Kraftfahrzeugs befindlich ist.

13. Schließsystem nach einem der Ansprüche 9 bis 12, **dadurch gekennzeichnet, daß** der Sensor für elektromagnetische Strahlung aus einer Antenne (12,17) mit gegebenenfalls zugehöriger Elektronik besteht, wobei es sich bei der Antenne (12,17) um eine eine Richtwirkung besitzende Planarantenne handelt.

14. Schließsystem nach einem der Ansprüche 1 bis 13, **dadurch gekennzeichnet, daß** die Mikrowellen eine Frequenz zwischen 2 und 30 GHz, insbesondere von 24 GHz, besitzen.

15. Schließsystem nach einem der Ansprüche 1 bis 14, **dadurch gekennzeichnet, daß** der Schlüssel (9) mit Mitteln für eine benutzerspezifische Freigabe versehen ist, wie mit Mitteln zur Erkennung des Fingerabdrucks oder der Sprache des zugeordneten Benutzers (30), so daß der Schlüssel (9) erst nach erfolgter Freigabe in den aktivierten Zustand umschaltbar ist.

16. Schließsystem nach einem der Ansprüche 1 bis 15, **dadurch gekennzeichnet, daß** der Schlüssel (9) nach Austausch des zweiten Betriebssignals (11, 11') mit der Steuereinrichtung (3,4) sowie gegebenenfalls einer Wartezeit aus dem aktivierten Zustand in den Ruhezustand rücksetzbar ist.

17. Schließsystem nach einem der Ansprüche 1 bis 16, **dadurch gekennzeichnet, daß** der Schlüssel (9) einen Speicher besitzt, in dem der jeweils zuletzt eingenommene Zustand der Steuereinrichtung (3, 4) und/oder der Zustand des Kraftfahrzeugs (1) und/oder sonstige Informationen, wie beispielsweise "Motor läuft" oder "Tür entriegelt", einspeicherbar ist

## Claims

1. Locking system, in particular a door locking system for authorising access and/or an ignition locking system for authorising the drive for a motor vehicle (1), with a control device (3, 4) having at least two states, to which first transmission/receiving means (22, 23) are connected, and an associated electronic key (9) which has second transmission/receiving means (24), wherein during the defined operation of the key (9) and the control device (3, 4) operating signals (10, 11, 11') can be transmitted between the first and second transmission/receiving means (22, 23, 24), whereby at least one defined area (13, 14, 21) is assigned to the first transmission/receiving means (22, 23), in which area the transmission of operating signals (10, 11, 11') is allowed, whereby the defined operation of the key (9) can be activated without the user (30) activating the key (9) by transmitting a first operating signal (10) from the first transmission/receiving means (22, 23) to the second transmission/receiving means (24) when the key (9) is located in the defined area (13, 14, 21), and whereby after activating the defined operation of the key (9) at least one coded second operating signal (11, 11') can be transmitted between the first and second transmission/receiving means (22, 23, 24), so that after a positive evaluation of the transmitted second operating signal (11, 11') with an authorised key (9) the state of the control device (3, 4) can be changed, **characterised in that** at least the part of the first operating signal (10) transmitted from the first transmission/receiving means (22, 23) for the control device (3, 4) to the second transmission/receiving means (24) in the key (9) and the part of the second operating signal (11, 11') and/or a further signal transmitted from the first transmission/receiving means (22, 23) for the control device (3, 4) to the second transmission/ receiving means (24) in the key (9) can be transmitted by a carrier consisting of electromagnetic microwaves in the GHz range.

2. Locking system according to claim 1, **characterised in that** the first operating signal (10) can be transmitted as a non-coded alarm signal.

3. Locking system according to claim 1 or 2, **characterised in that** a monitoring means (15) for detecting the approach of a user (30) to the defined area (13, 14, 21) and/or the presence of the user (30) in the defined area (13, 14, 21) is assigned to the defined area (13, 14, 21), whereby the transmission of the further first operating signal (10) can be triggered by detection of the user (30) by the monitoring means (15).

4. Locking system according to claim 1, 2 or 3, **characterised in that** a switching means activated by a user (30) located in the defined area (13, 14, 21) and/or a sensor detecting an action of the user (30), such as the activation of the door handle (35) or the activation of the brake and/or clutch pedal, is assigned to the defined area (13, 14, 21), whereby the transmission of the further first operating signal (10) can be triggered due to the activation of the switching means and/or due to the detection by the sensor.

5. Locking device according to one of claims 1 to 4, **characterised in that** after a positive evaluation of the transmitted second operating signal (11, 11') the control device (3, 4) firstly adopts a release state, **in that** and a handle activated by a user (30) located in the defined area (13, 14, 21) is assigned to the defined area (13, 14, 21), and **in that** by activating the handle the change in the state of the control device (3, 4), such as unlocking the vehicle doors (6) and/or starting the motor vehicle by operating a key (36), can be activated by the user (30) when the control device (3, 4) is in the release state.

6. Locking system according to one of claims 1 to 5, **characterised in that** after activating the defined operation of the key (9) a return signal (41) can be transmitted from the second transmission/receiving means (24) to the first transmission/receiving means (22, 23), **in that** afterwards an identity marking (42), for example the vehicle number, can be transmitted from the first transmission/receiving means (22, 23) to the second transmission/receiving means (24), **in that** then a return marking (43), for example the vehicle number and the key number, can be transmitted back from the second transmission/receiving means (24) to the first transmission/receiving means (22, 23), and **in that** afterwards the second operating signal (11, 11') can be exchanged, preferably in a bidirectional communication between the first and second transmission/receiving means (22, 23, 24).

7. Locking system according to one of claims 1 to 6, **characterised in that** the part of the first operating signal (10) and/or the second operating signal (11, 11') and/or a further signal transmitted from the second transmission/receiving means (24) in the key (9) to the first transmission/receiving means (22, 23) for the control device (3, 4) can be transmitted with a carrier consisting of electromagnetic microwaves in the GHz range.

8. Locking system according to one of claims 1 to 6, **characterised in that** the part of the first operating signal (10) and/or the second operating signal (11, 11') and/or a further signal transmitted by the second transmission/receiving means (24) in the key (9) to the first transmission/receiving means (22, 23) for the control device (3, 4) can be transmitted with a carrier consisting of electromagnetic waves in the high frequency range, such as in the MHz range, or a carrier consisting of electromagnetic waves in the inductive range, such as in the KHz range.

9. Locking system according to one of claims 1 to 8, **characterised in that** the defined area as a first defined area (13, 14) includes part of the outer area of the motor vehicle (1), **in that** the first defined area (13, 14) is assigned to an element which can be locked by the action of the control device (3, 4), such as the vehicle doors (6) or the boot lid (7), and has an alignment which deviates from the circle symmetry that is roughly club-like or in the form of a double club, such that the first defined area (13, 14) extends substantially on one side adjacent to the lockable element, and **in that** a sensor for electromagnetic radiation for the transmission/receiving means (22) of the control device (4) for the first defined area (13, 14) is arranged on the external mirror (16), in the door handle (35), in the ram protection strip on the vehicle door (6), in the rear bumper and/or on the rear windscreen (18) of the motor vehicle (1).

10. Locking system according to claim 9, **characterised in that** the first area (13) is in the form of a club starting from an external mirror (16) or both external mirrors (16) of the motor vehicle (1), wherein the opening angle of the club is at least 70 degrees, and/or the first area (13) is designed in the form of a double club starting from the vehicle doors (6), wherein the opening angle of the double club is about 180 degrees, and/or the first area (14) is designed in the form of a club starting from the rear windscreen (18) of the motor vehicle (1), wherein the opening angle of the club is at least 90 degrees, and **in that** the range of the respective club is at least 1.5 m and up to 3 m.

11. Locking system according to one of claims 1 to 10, **characterised in that** by means of an additional signal (25) which can be transmitted by the key (9) when triggered by the user (30) in the manner of a remote control, the control signal (4) for acting on the lockable element can be operated from outside the first defined area (13, 14).

12. Locking system according to one of claims 1 to 11, **characterised in that** the defined area as a second defined area (21) includes at least a portion of the motor vehicle interior, **in that** the second defined area (21) is assigned to an element which can be locked by the action of the control device (3) such as the ignition lock (31) the steering wheel lock (32) or immobiliser, and **in that** a sensor for electromagnetic radiation for the transmission/receiving means (23) of the control device (3) for the second defined area (21) is located on the inside mirror, in the central console, on the roof and/or on the rear storage area of the motor vehicle.

13. Locking system according to one of claims 9 to 12, **characterised in that** the sensor for electromagnetic radiation consists of an aerial (12, 17) with if necessary an assigned electronic system, wherein the aerial (12, 17) is a planar aerial with a directional effect.

14. Locking system according to one of claims 1 to 13, **characterised in that** the microwaves have a frequency of between 2 and 30 GHz, in particular 24 GHz.

15. Locking system according to one of claims 1 to 14, **characterised in that** the key (9) is provided with means for user-specific release, such as means for identifying the finger print or speech of the assigned user (30) so that the key (9) can only be switched after releasing into the activated state.

16. Locking system according to one of claims 1 to 15, **characterised in that** the key (9) can be returned after the exchange of the second operating signal (11, 11') with the control device (3, 4) and if necessary after a waiting time from the activated state into the position of rest.

17. Locking system according to one of claims 1 to 16, **characterised in that** the key (9) has a memory, in which the latterly adopted state of the control device (3, 4) and/or the state of the motor vehicle (1) and/or other information, such as for example "motor runs" or "door unlocked", can be stored.

## Revendications

1. Système de fermeture, notamment système de fermeture de porte avec autorisation d'accès et/ou d'utilisation du système de clef de contact pour l'autorisation de conduite d'un véhicule (1), comportant :
- une installation de commande (3, 4) ayant au moins deux états en liaison à laquelle sont reliés des premiers moyens d'émission/réception (22, 23) et une clef électronique (9) associée, ayant des seconds moyens d'émission/réception (24), selon lequel
- pendant l'utilisation normale de la clef (9) et de l'installation de commande (3, 4), des signaux de fonctionnement (10, 11, 11') peuvent être transmis entre le premier et le second moyen d'émission/réception (22, 23, 24),
- le premier moyen d'émission/réception (22, 23) présente au moins une zone limitée (13, 14, 21) dans laquelle il est possible de transmettre les signaux de fonctionnement (10, 11, 11'),
- le moyen de fonctionnement normal de la clef (9) sans action d'un utilisateur (30) sur la clef (9), est activé par la transmission d'un premier signal de fonctionnement (10) à partir du premier moyen d'émission/réception (22, 23) vers le second moyen d'émission/réception (24) si la clef (9) se trouve dans la zone limitée (13, 14, 2 1), et
- après activation du fonctionnement normal de la clef (9), au moins un second signal de fonctionnement (11, 11'), codé, est transmis entre le premier et le second moyen d'émission/réception (22, 23, 24) de façon qu'après une exploitation positive du second signal de fonctionnement (11, 11') transmis, pour la clef (9) autorisée, se produit une modification de l'état de l'installation de commande (3, 4),
**caractérisé en ce que**
au moins la partie du premier signal de fonctionnement (10) transmise à partir du premier moyen d'émission/réception (22, 23) de l'installation de commande (3, 4) vers le second moyen d'émission/réception (24) de la clef (9) ainsi que la partie du second signal de fonctionnement (11, 11') transmise du premier moyen d'émission/réception (22, 23) de l'installation de commande (3, 4) vers le second moyen d'émission/réception (24) de la clef (9), et/ou un autre signal se transmet avec une porteuse dans la plage GHz par des micro-ondes électromagnétiques.

2. Système de fermeture selon la revendication 1,
**caractérisé en ce que**
le premier signal de fonctionnement (10) est transmis sous forme de signal de réveil non codé.

3. Système de fermeture selon la revendication 1 ou 2,
**caractérisé en ce qu'**
- un moyen de surveillance (15) pour détecter le rapprochement de l'utilisateur (30) de la zone limitée (13, 14, 21) et/ou pour le séjour de l'utilisateur (30) dans la zone limitée (13, 14, 21), est associé à la zone limitée (13, 14, 21),
- la transmission de l'autre premier signal de fonctionnement (10) étant déclenchée à partir de la détection de l'utilisateur (30) par le moyen de surveillance (15).

4. Système de fermeture selon les revendications 1, 2 ou 3,
**caractérisé en ce qu'**
- un moyen de commutation actionné par un utilisateur (30) qui se trouve dans la zone limitée (13, 14, 21) et/ou un capteur détectant une action de l'utilisateur (30) telle que l'actionnement de la poignée de porte (35) ou l'actionnement de la pédale de frein et/ou d'embrayage, est associé à la zone limitée (13, 14, 21),
- la transmission de l'autre premier signal de fonctionnement (10) étant déclenchée par l'actionnement du moyen de commutation et/ ou par la détection par le capteur.

5. Système de fermeture selon les revendications 1 à 4,
**caractérisé en ce qu'**
- après l'exploitation positive du second signal (11, 11') transmis, l'installation de commande (3, 4) passe tout d'abord dans un état libéré,
- une poignée qui peut-être actionnée par un utilisateur (30) se trouvant dans la zone limitée (13, 14, 21) est associée à la zone limitée (13, 14, 21), et
- l'actionnement de la poignée, produit alors le changement de l'état de l'installation de commande (3, 4) ainsi que le déverrouillage des portières (6) du véhicule et/ou le démarrage du véhicule par l'actionnement d'une touche (36) par l'utilisateur (30), si l'installation de commande (3, 4) est dans son état libéré.

6. Système de fermeture selon les revendications 1 à 5,
**caractérisé en ce qu'**
- après activation du fonctionnement normal de la clef (9), un signal d'information de retour (41) est transmis par le second moyen d'émission/réception (24) vers le premier moyen d'émission/réception (22, 23),
- ensuite, une caractéristique d'identité (42) par exemple le numéro d'immatriculation du véhicule, est transmise par le premier moyen d'émission/réception (22, 23) au second moyen d'émission/réception (24),
- puis une caractéristique de message en retour (43) par exemple le numéro d'immatriculation du véhicule et le numéro de la clef sont transmis en retour par le second moyen d'émission/réception (24) vers le premier moyen d'émission/réception (22, 23), et
- ensuite, le second signal de fonctionnement (11, 11') est échangé de préférence selon une communication bidirectionnelle entre le premier et le second moyen d'émission/réception (22, 23, 24).

7. Système de fermeture selon les revendications 1 à 6,
**caractérisé en ce que**
la partie du premier signal de fonctionnement (10) transmise par le second moyen d'émission/réception (24) de la clef (9) vers le premier moyen d'émission/réception (22, 23) de l'installation de commande (3, 4) et/ou le second signal de fonctionnement (11, 11') et/ou un autre signal sont transmis avec une porteuse composée de micro-ondes électromagnétiques dans le domaine GHz.

8. Système de fermeture selon les revendications 1 à 6,
**caractérisé en ce que**
la partie du premier signal de fonctionnement (10) transmise par le second moyen d'émission/réception (24) de la clef (9) vers le premier moyen d'émission/réception (22, 23) de l'installation de commande (3, 4) et/ou le second signal de fonctionnement (11, 11') et/ou un autre signal se transmettent avec une porteuse d'ondes électromagnétiques dans la plage haute fréquence telle que la plage MHz ou d'ondes électromagnétiques dans le domaine inductif tel que la plage KHz.

9. Système de fermeture selon les revendications 1 à 8,
**caractérisé en ce que**
- le domaine limité comprend comme première zone (13, 14), une partie de la zone extérieure du véhicule automobile (1),
- la première zone limitée (13, 14) est associée à un élément se fermant sous l'action de l'installation de commande (3, 4) tel que la portière du véhicule (6) ou le coffre (7) et a un alignement différent d'une symétrie de rotation sensiblement en forme de lobe ou de double lobe de façon que la première zone limitée (13, 14) s'étende pratiquement d'un côté au voisinage de l'élément à fermer, et
- un capteur de rayonnement électromagnétique pour le moyen d'émission/réception (22) de l'installation de commande (4), par la première zone limitée (13, 14) est prévu dans le rétroviseur extérieur (16), dans une poignée de porte (35), dans le pare-chocs protégeant les portières (6) du véhicule, dans le pare-chocs arrière et/ou sur la lunette arrière (18) du véhicule automobile (1).

10. Système de fermeture selon la revendication 9,
**caractérisé en ce que**
- la première zone (13) est réalisée sous la forme d'un lobe partant d'un rétroviseur extérieur (16) ou des deux rétroviseurs extérieurs (16) du véhicule automobile (1), l'angle d'ouverture du lobe représentant au moins 70°, et/ou
- la première zone (13) est réalisée sous la forme d'un double lobe partant de l'une des portières (6) du véhicule, l'angle d'ouverture du double lobe représentant environ 180°, et/ou
- la première zone (14) est réalisée sous la forme d'un lobe partant de la lunette arrière (18) du véhicule automobile (1), l'angle d'ouverture du lobe représentant au moins 90°, et
- la portée de chaque lobe est comprise entre au moins 1,5 m et 3 m.

11. Système de fermeture selon les revendications 1 à 10,
**caractérisé en ce que**
l'installation de commande (4) est actionnée pour agir sur l'élément de fermeture à l'extérieur de la première zone limitée (13, 14) par l'intermédiaire d'un autre signal (25) émis par la clef (9) lors du déclenchement par l'utilisateur (30) à la manière d'un défaut de commande.

12. Système de fermeture selon les revendications 1 à 11,
**caractérisé en ce que**
- la zone limitée comprend comme seconde zone limitée (21), au moins une partie de la zone intérieure du véhicule automobile,
- la seconde zone limitée (21) est associée à un élément susceptible d'être bloqué par l'action de l'installation de commande (3) telle que la serrure de contact d'allumage (31), le verrouillage du volant (32) ou le verrouillage pour l'immobilisation, et
- un capteur de rayonnement électromagnétique pour le moyen d'émission/réception (23) de l'installation de commande (3) pour la seconde zone limitée (21) est prévu sur le rétroviseur intérieur, dans la console centrale, dans le pavillon et/ou sur la plage arrière du véhicule automobile.

13. Système de fermeture selon les revendications 9 à 12,
**caractérisé en ce que**
le capteur de rayonnement électromagnétique se compose d'une antenne (12, 17) avec le cas échéant l'électronique associée, l'antenne (12, 17) étant une antenne planaire à effet directionnel.

14. Système de fermeture selon les revendications 1 à 13,
**caractérisé en ce que**
les micro-ondes ont une fréquence comprise entre 2 et 30 GHz, notamment égale à 24 GHz.

15. Système de fermeture selon les revendications 1 à 14,
**caractérisé en ce que**
la clef (9) est munie de moyens pour une libération spécifique à l'utilisateur tels que des moyens de détection de l'empreinte d'un doigt ou de la voix de l'utilisateur (30) associés de façon que la clef (9) ne commute dans son état actif qu'une fois libérée.

16. Système de fermeture selon les revendications 1 à 15,
**caractérisé en ce qu'**
après échange du second signal de fonctionnement (11, 11') avec l'installation de commande (3, 4) et le cas échéant un temps d'attente à partir de l'état activé, la clef (9) se remet en position de repos.

17. Système de fermeture selon les revendications 1 à 16,
**caractérisé en ce que**
la clef (9) comporte une mémoire contenant respectivement l'état pris par l'installation de commande (3, 4) et/ou l'état du véhicule (1) et/ou d'autres informations telles que par exemple "moteur en marche" ou "déverrouillage de portière".
